# EUROPÄISCHE PATENTANMELDUNG

(11) **EP 4 707 202 A1**
(43) Veröffentlichungstag der Anmeldung: **11.03.2026**
(21) Anmeldenummer: 25199039.6
(22) Anmeldetag: 29.08.2025
(51) Int. Cl.: B65G 45/02, F16N 7/12, B65G 53/32, F16L 57/00

(54) **SCHMIERMITTELAPPLIKATOR ZUM SCHMIEREN VON BETONFÖRDERLEITUNGEN**

(30) Priorität: 30.08.2024 DE 102024124866
(71) Anmelder: Duvnjak, Ante, 65510 Idstein (DE); Füllmich, Sven, 25486 Alveslohe (DE); Spies, Karina, 66740 Saarlouis (DE)
(72) Erfinder: Duvnjak, Ante, 65510 Idstein (DE); Füllmich, Sven, 25486 Alveslohe (DE); Spies, Karina, 66740 Saarlouis (DE)
(74) Vertreter: Werner, André

(57) **Zusammenfassung**

Die Erfindung betrifft einen Schmiermittelapplikator (1) sowie ein Verfahren zum gleichmäßigen und schmiermittelarmen Schmieren einer Betonförderleitung (5). Der Schmiermittelapplikator (1) umfasst eine vorgegebene Mengeneinheit eines Schmiermittels (3) zur Ausbildung eines Schmierfilms (3.1) auf der Innenwandung der Betonförderleitung (5) sowie einen Schmiermittelträger (2) aus einem weichelastischen Material. Der Schmiermittelapplikator (1) eignet sich als Ersatz von Anfahrmischungen bei Förderung von pumpbarem Frischbeton (4).

## Beschreibung

Die Erfindung betrifft einen Schmiermittelapplikator zum Schmieren von Betonförderleitungen sowie ein Verfahren zum Schmieren von Betonförderleitungen mittels des Schmiermittelapplikators. Der Einsatzbereich des Schmiermittelapplikators erstreckt sich auf stationäre ebenso wie mobile Fördereinheiten zur Förderung von pumpbarem Frischbeton oder anderen pumpbaren Baustoffdispersionen.

Bei der Herstellung von Betonbauteilen oder -bauwerken bedient man sich regelmäßig pumpbaren Frischbetons, der mittels Betonpumpen über Betonförderleitungen, d. h. Rohre oder Schläuche, an die Verarbeitungsposition transportiert wird. Zu Beginn der Förderung des Frischbetons durch eine Betonförderleitung werden dem Frischbeton Feinanteile entzogen, die sich an die Innenwandung der Betonförderleitung anlagern und hierdurch die Betonförderleitung schmieren. Bei langen Förderstrecken kann der Feinanteilentzug jedoch zum Verstopfen der Betonförderleitung führen. Um dies zu verhindern, bedient man sich einer schmiermittelhaltigen Anfahrmischung, die vorlaufend vor dem Frischbeton durch die Betonförderleitung gepumpt wird. Die Betonförderleitung wird hierbei durch das in der Anfahrmischung enthaltene Schmiermittel geschmiert, indem sich das Schmiermittel in Form eines Schmierfilms - ähnlich wie der Feinanteil des Frischbetons - an der Innenwandung der Betonförderleitung anlagert. Dieser Schmierfilm verhindert, dass dem nachfolgend durch die geschmierte Betonförderleitung gepumpten Frischbeton die Feinanteile entzogen werden. Die Gefahr von Verstopfungen wird mithin eingedämmt.

Obwohl der tatsächliche Bedarf zur Schmierung von Betonförderleitungen für etwa 50 m Förderleitungsstrecke bei unter 2 kg Anfahrmischung liegt, werden im Praxisbetrieb meist Mengen von circa 1000 kg Anfahrmischung verwendet. Diese deutliche Überdimensionierung der praxisüblich verwendeten Menge an Anfahrmischung gegenüber der für die Schmierung notwendigen Menge ist darauf zurückzuführen, dass bei Beschränkung auf Mindermengen der ordnungsgemäße Vorlauf der Anfahrmischung vor dem Frischbeton und die allumfängliche Benetzung der Innenwandungen nicht hinreichend gewährleistet werden können.

Ein weiterer Praxisnachteil bei Anwendung der konventionellen Anfahrmischungen besteht in der Gefahr, dass die Anfahrmischungen beim Einfüllen in die zu schmierenden Betonförderleitungen nicht die herstellerseitig geforderte Konsistenz aufweisen - zum Beispiel durch Restwasser in den Mischanlagen. Zu stark verdünnte Anfahrmischungen sind jedoch regelmäßig nicht mehr gebrauchsfähig und müssen verworfen werden. Die dann notwendige Bereitstellung einer neuen Anfahrmischung ist im Baustellenbetrieb zumeist mit unerwünschten Arbeitsverzögerungen und hohen Zusatzkosten verbunden.

Zudem ist die Anfahrmischung im Regelfall ungeeignet, anforderungsgerechten Fertigbeton auszubilden. Daher wird die aus der Betonförderleitung austretende Anfahrmischung gewöhnlich in einem separaten Behälter aufgefangen. Erst wenn die Anfahrmischung komplett aus der Betonförderleitung ausgetreten ist, wird der Frischbeton in die Verarbeitungsposition eingebracht. Die abgetrennte Anfahrmischung ist nicht weiterverwendbar und daher zu entsorgen.

DE 195 14 750 A1 beschreibt eine Dickstoffpumpe, insbesondere eine Betonpumpe, bei der an Reinigungsöffnungen von Förder- oder Schwenkrohren eine zylindrische Reinigungspatrone anschließbar ist. Diese Patrone kann mit Reinigungskörpern, wie elastomeren Schwammkugeln, bestückt und über Druckluft- oder Wasseranschlüsse in die Förderleitung eingebracht werden, um Betonreste auszutreiben und die Leitung zu reinigen. Neben Reinigungskörpern ist - als Anpumphilfe - auch die Verwendung eines mit einem Schmier- oder Gleitmittel gefüllten Beutels bekannt, der mit Wasser in die Förderleitung gepresst und anschließend mit dem Beton zum Ausgang der Förderleitung gepumpt wird.

JP H09-194 030 A offenbart ein Verfahren und eine Vorrichtung zum Transport von Beton von einer höhergelegenen zu einer tiefergelegenen Position über ein Gefälle führende Förderleitungen. Dabei wird zunächst ein Verdrängungsmaterial, meist Wasser, in die Leitung eingebracht und durch ein Trennelement vom Beton separiert, bevor das Verdrängungsmaterial am unteren Leitungsende schrittweise abgelassen wird, um den Beton ohne Materialtrennung zu fördern. Das Trennelement kann zum Beispiel Schaumstoffmaterial oder Gummidichtungen umfassen; es dient der Trennung von Verdrängungsmaterial und Beton, um Vermischungen beim langsamen Absenken des Betons mit dem Verdrängungsmaterial zu verhindern.

Aufgabe der Erfindung ist es, eine Vorrichtung und ein Verfahren zum Schmieren einer Betonförderleitung bereitzustellen, die es ermöglichen, ein Schmiermittel zur Schmierung von Betonförderleitungen vor der Durchleitung von Frischbeton verbrauchsarm und gleichmäßig auf den Innenwandungen der Betonförderleitungen zu applizieren.

Diese Aufgabe wird durch einen Schmiermittelapplikator zum Schmieren einer Betonförderleitung mit den Merkmalen nach Anspruch 1 sowie ein Verfahren zum Schmieren einer Betonförderleitung nach Anspruch 10 gelöst. Zweckmäßige Weiterbildungen der Erfindung sind in den Ansprüchen 2 bis 9 aufgeführt.

Der vorgeschlagene Schmiermittelapplikator dient hierbei zum Schmieren einer Betonförderleitung durch Erzeugen eines aus einem Schmiermittel bestehenden Schmierfilms auf der Innenwandung der Betonförderleitung.

Nach Maßgabe der Erfindung umfasst der Schmiermittelapplikator eine vorgegebene Mengeneinheit des zur Bildung des Schmierfilms dienenden Schmiermittels sowie einen Schmiermittelträger aus einem weichelastischen Material. Hierbei werden unter einem weichelastischen Material vorzugsweise Werkstoffe verstanden, die eine Stauchhärte im Bereich von bis zu 50 kPa aufweisen. Das weichelastische Material kann unter anderem ein Schaumstoff, insbesondere ein offenporiger Schaumstoff, oder ein textiler Werkstoff, insbesondere ein Kurzfasertextil, wie zum Beispiel Filz, sein. Das Schmiermittel der vorgegebenen Mengeneinheit des Schmiermittels ist im Ausgangszustand regelmäßig eine Dispersion mit flüssiger bis pastöser Konsistenz. Als Schmiermittel dienen üblicherweise die gleichen Schmiermittel, die in konventionellen Anfahrmischungen enthalten sind.

Der Schmiermittelapplikator ist so ausgebildet, dass er bei der Förderung von Frischbeton durch die Betonförderleitung in Förderrichtung vor der Front des Frischbetons durch die Betonförderleitung gleitet, wobei der Schmiermittelträger in Form eines allumfänglich an der Innenwandung der Betonförderleitung unter geringem Radialdruck anliegenden Pfropfens ausgebildet ist. D. h., der Schmiermittelträger ist gegenüber dem Innendurchmesser der Betonförderleitung geringfügig überdimensioniert, sodass er unter leichtem Zusammendrücken in die Betonförderleitung geschoben werden kann, sich hierbei an die Innenwandung anlegt und durch den Förderdruck des Frischbetons mit leichter, reibungsbedingter Bremswirkung durch die Betonförderleitung gefördert werden kann.

Die vorgegebene Mengeneinheit des Schmiermittels ist erfindungsgemäß bei in die Betonförderleitung eingebrachtem Schmiermittelträger vom Schmiermittelträger aufgenommen und/oder an den Schmiermittelträger auf dessen der Front des Frischbetons zugewandten Oberfläche angedrückt. Die vorgegebene Mengeneinheit des Schmiermittels ist so bemessen, dass diese zur Ausbildung des Schmierfilms über die gesamte Länge der Betonförderleitung ausreicht.

Das vorgeschlagene Verfahren zum Schmieren der Betonförderleitung durch Erzeugen des aus dem Schmiermittel bestehenden Schmierfilms auf der Innenwandung der Betonförderleitung wird mit dem als Einheit aus dem Schmiermittelträger und der vorgegebenen Mengeneinheit des Schmiermittels gebildeten Schmiermittelapplikator durchgeführt. Der Schmiermittelapplikator wird hierzu in die zu schmierende Betonförderleitung eingesetzt; anschließend wird der Frischbeton in die mit dem Schmiermittelapplikator bestückte Betonförderleitung gepumpt, wobei der Frischbeton den Schmiermittelapplikator vor seiner Front hertreibt.

Hierbei lagert sich das vom Schmiermittelträger geführte Schmiermittel während des Gleitens durch die Betonförderleitung in Förderrichtung kometenschweifartig hinter dem Schmiermittelträger unter Ausbildung des Schmierfilms an die Innenwandung der Betonförderleitung an.

Der Schmiermittelträger bremst und stabilisiert die Front des durch die Betonförderleitung gepumpten Frischbetons. Das innerhalb des Schmiermittelträgers oder in der Quetschzone zwischen der Front des Frischbetons und dem Schmiermittelträger befindliche Schmiermittel wird aus dem Schmiermittelträger oder aus der Quetschzone radial nach außen gedrückt und lagert sich unter Ausbildung des Schmierfilms an der Innenwandung der Betonförderleitung an. Durch die Stabilisierung der Förderfront des Frischbetons wird die Innenwandung der Betonförderleitung - unabhängig davon, ob die Förderrichtung der Schwerkraft folgt oder gegen diese gerichtet ist - gleichmäßig und vollständig benetzt und geschmiert.

Der Schmiermittelapplikator ermöglicht daher die sachgerechte Schmierung von Betonförderleitungen mit einer deutlich reduzierten Menge an Schmiermittel, verglichen mit der praxisüblichen Menge von Schmiermittel bei Einsatz von konventionellen Anfahrmischungen. Der erfindungsgemäße Schmiermittelapplikator kann den Einsatz konventioneller Anfahrmischungen mithin vollständig substituieren, wodurch die mit den Anpumpvorgängen verbundenen Kosten erheblich reduzierbar sind.

Aufgrund des geringen Größenbedarfs können mehrere der Schmiermittelapplikatoren den Mischvorrichtungen als Vorrat beigestellt oder in Mischfahrzeugen mitgeführt werden. Infolge dieser Möglichkeit, den Schmiermittelapplikator schnell verfügbar zu halten, kann die Schmierung von Betonförderleitungen im Bedarfsfall verzögerungsfrei vorgenommen werden. Den Arbeitsfortschritt behindernde Wartezeiten auf die im Regelfall anzufordernden, aufgrund des Größenbedarfs nicht als Vorrat beistellbaren Anfahrmischungen entfallen hierdurch.

Ferner kann, da die vorgegebene Mengeneinheit des Schmiermittels des Schmiermittelapplikators vergleichsweise gering ausfällt, mit der Frischbetonförderung unmittelbar in der Verarbeitungsposition begonnen werden. Der Schmiermittelträger, der nach dem Ausstoßen aus der Betonförderleitung in den Bereich der Verarbeitungsposition fällt, kann problemlos entnommen und zudem wiederverwendet werden. Die geringen Schmiermittelanteile, die in den Bereich der Verarbeitungsposition gelangen, beeinträchtigen die anforderungsgerechte Ausbildung des Fertigbetons nicht. Durch Verwendung des Schmiermittelapplikators entfällt mithin das Auffangen und die Entsorgung der durch die Betonförderleitung gepumpten Anfahrmischung.

Der Schmiermittelträger kann geometrisch verschiedene, vorzugsweise drehsymmetrische Formen aufweisen, zum Beispiel die Form eines Zylinders, einer Kugel, eines Balls, eines Projektils oder dergleichen mehr. Vorzugsweise ist der Schmiermittelträger monolithisch aufgebaut. Der Schmiermittelträger kann jedoch auch in Form eines Zylinders ausgebildet sein, der aus einer flexiblen Matte oder Bahn gewickelt ist.

Bei zylinderförmiger bzw. teilweise zylinderförmiger Ausbildung des Schmiermittelträgers, d. h. zum Beispiel bei Ausbildung als Zylinder oder Projektil, kann der Schmiermittelträger an seiner äußeren Mantelfläche eine Gewinderille aufweisen. Diese versetzt den Schmiermittelträger beim Durchgleiten durch die Betonförderleitung in eine rotierende Bewegung, wodurch wiederum die umfängliche Schmiermittelverteilung verbessert wird.

Gemäß einer Ausgestaltung des Schmiermittelapplikators ist die vorgegebene Mengeneinheit des Schmiermittels oder ein Teil derselben in Form eines aus dem Schmiermittel bestehenden, pastösen Schmiermittelformlings ausgebildet, der bei in die Betonförderleitung eingebrachtem Schmiermittelapplikator an den Schmiermittelträger an dessen der Front des Frischbetons zugewandten Seite angedrückt ist.

Für die erleichterte Anwendung des Schmiermittelapplikators kann vorgesehen sein, dass dieser bzw. seine Komponenten in einem oder mehreren Transportbeuteln und/oder in einer Transportkartusche bereitgestellt werden. So kann zum Beispiel ein mit der vorgegebenen Mengeneinheit des Schmiermittels getränkter Schmiermittelträger aus offenporigem Schaumstoff in einem verschlossenen Transportbeutel bevorratet werden. Für die Anwendung wird der Transportbeutel an einem Ende aufgeschnitten und der Schmiermittelapplikator wird aus dem Transportbeutel direkt in die Betonförderleitung eingeführt. Bei Ausbildung der vorgegebenen Mengeneinheit des Schmiermittels als Schmiermittelformling kann dieser in einem separaten Transportbeutel oder gemeinsam mit dem Schmiermittelträger in einem Transportbeutel eingebracht sein. Die Transportbeutel dienen neben der vereinfachten Lagerung auch dazu, das Schmiermittel vor Austrocknung oder eventuellen Abbindereaktionen zu schützen. Die Transportkartusche ist vorgesehen, die in den Transportbeuteln eingebrachten Komponenten des Schmiermittelapplikators vor mechanischen Einwirkungen zu schützen; sie kann zum Beispiel als Kunststoffrohr ausgebildet sein.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen:
- Fig. 1:: eine erste Ausführung des Schmiermittelapplikators in Perspektivansicht;
- Fig. 2:: die erste Ausführung des Schmiermittelapplikators während der Anwendung in Perspektivansicht;
- Fig. 3:: die Präparation der ersten Ausführung des Schmiermittelapplikators in Perspektivansicht;
- Fig. 4:: eine zweite Ausführung des Schmiermittelapplikators in Perspektivansicht;
- Fig. 5:: den verpackten Schmiermittelformling gemäß der zweiten Ausführung des Schmiermittelapplikators in Perspektivansicht;
- Fig. 6:: die zweite Ausführung des Schmiermittelapplikators während der Anwendung in Perspektivansicht;
- Fig. 7:: eine dritte Ausführung des Schmiermittelapplikators in Perspektivansicht;
- Fig. 8:: den ungetränkten Schmiermittelträger gemäß der dritten Ausführung des Schmiermittelapplikators in Perspektivansicht;
- Fig. 9:: den mit Schmiermittel getränkten Schmiermittelträger gemäß der dritten Ausführung des Schmiermittelapplikators in Perspektivansicht;
- Fig. 10:: die dritte Ausführung des Schmiermittelapplikators während der Anwendung in Perspektivansicht;
- Fig. 11:: den verpackten Schmiermittelapplikator gemäß der ersten Ausführung in Perspektivansicht;
- Fig. 12:: eine erste Verpackungsvariante des Schmiermittelapplikators gemäß der zweiten Ausführung in Perspektivansicht;
- Fig. 13:: eine zweite Verpackungsvariante des Schmiermittelapplikators gemäß der zweiten Ausführung in Perspektivansicht; und
- Fig. 14:: den verpackten Schmiermittelapplikator gemäß der dritten Ausführung in Perspektivansicht.

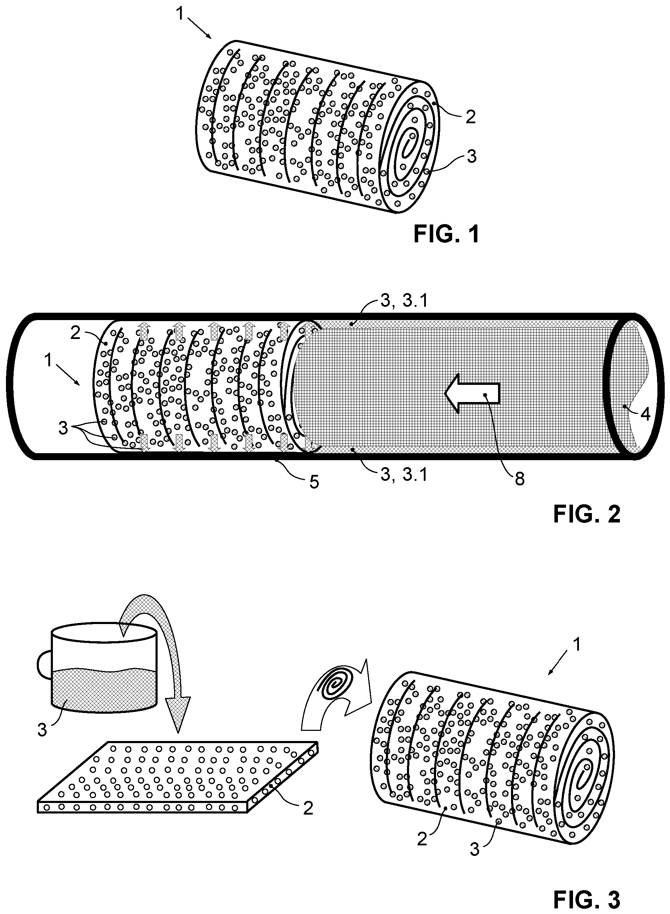

Die erste Ausführung des Schmiermittelapplikators 1 gemäß Fig. 1 umfasst den als Zylinder ausgebildeten, aus einem offenporigen Schaumstoff bestehenden Schmiermittelträger 2, der mit dem Schmiermittel 3 entsprechend der vorgegebenen Mengeneinheit getränkt ist. Der zylinderförmige Schmiermittelträger 2 ist aus einer flexiblen, gewickelten Matte hergestellt. Im Ausführungsbeispiel besitzt der Schmiermittelträger 2 - im unkomprimierten Zustand - eine Länge von circa 30 cm und einen Außendurchmesser von circa 14 cm. Durch Kompression des weichelastischen Schaumstoffs kann der Schmiermittelträger 2 manuell auf eine Länge von circa 10 cm und einen Außendurchmesser von circa 5 cm zusammengedrückt werden.

Gemäß der in Fig. 2 veranschaulichten Anwendung der ersten Ausführung des Schmiermittelapplikators 1 wird der Schmiermittelapplikator 1, d. h. der mit der vorgegebenen Mengeneinheit des Schmiermittels 3 getränkte Schmiermittelträger 2, in die Betonförderleitung 5 eingebracht. Die Betonförderleitung 5 besitzt im Ausführungsbeispiel einen Innendurchmesser von 125 mm, d. h., der zylinderförmige Schmiermittelträger 2 ist nach dem Einbringen in die Betonförderleitung 5 auf etwa 90 % seines unkomprimierten Außendurchmessers zusammengedrückt. Hierdurch liegt der Schmiermittelträger 2 am gesamten Umfang mit gleichmäßigem Druck an der Innenwandung der Betonförderleitung 5 an.

Der durch die Betonförderleitung 5 in Förderrichtung 8 gepumpte Frischbeton 4 treibt den Schmiermittelapplikator 1 vor sich her, wobei der Schmiermittelträger 2 aufgrund der Wandreibung als Bremse wirkt und hierdurch die Front des Frischbetons 4 stabilisiert. Der Schmiermittelträger 2 wird infolge des von der Front des Frischbetons 4 auf den Schmiermittelträger 2 ausgeübten Axialdrucks und der entgegengesetzt gerichteten Reibungskraft axial leicht gestaucht, wodurch das Schmiermittel 3 aus dem Schmiermittelträger 2 austritt. Das Schmiermittel 3 bildet im Kontaktbereich zur Innenwandung der Betonförderleitung 5 - vorlaufend vor der Front des Frischbetons 4 - den Schmierfilm 3.1 gleichmäßig über den gesamten Umfang der Betonförderleitung 5 aus. Der nachfließende Frischbeton 4 wird mithin durch die umfänglich gleichmäßig geschmierte Betonförderleitung 5 gefördert.

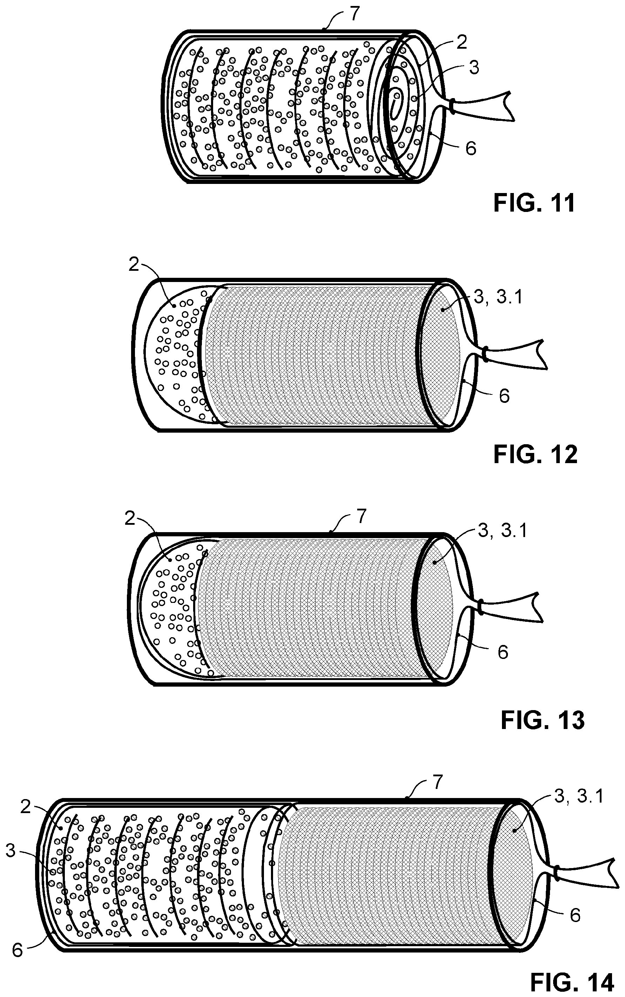

Die Herstellung der ersten Ausführung des Schmiermittelapplikators 1 verdeutlicht Fig. 3: Eine die Basis des Schmiermittelträgers 2 bildende Matte bzw. Decke aus offenporigem Schaumstoff, im Ausführungsbeispiel mit einer Länge von circa 120 cm, einer Breite von circa 30 cm und einer Dicke von circa 2 cm (im unkomprimierten Zustand), wird mit der vorgegebenen Mengeneinheit des Schmiermittels 3, im Ausführungsbeispiel circa 3 kg bis 4 kg Schmiermittel 3, getränkt und anschließend in die Zylinderform gewickelt. Der so hergestellte Schmiermittelapplikator 1 kann - siehe hierzu Fig. 11 - zur Vorratslagerung in einem Transportbeutel 6 und einer aus einem Kunststoffrohr gebildeten Transportkartusche 7 verpackt bereitgestellt werden.

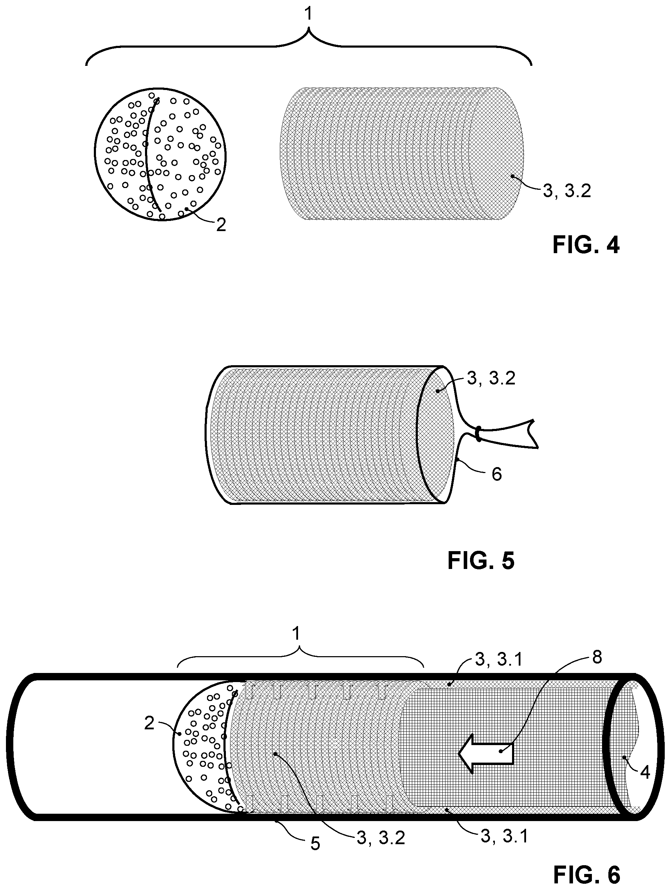

Die zweite Ausführung des Schmiermittelapplikators 1 gemäß Fig. 4 umfasst den kugel- bzw. ballförmigen Schmiermittelträger 2, der im Ausführungsbeispiel aus einem weichelastischen Material ohne offene Porosität besteht, sowie die als Schmiermittelformling 3.2 ausgebildete vorgegebene Mengeneinheit des Schmiermittels 3. Der kugel- bzw. ballförmige Schmiermittelträger 2 hat im unkomprimierten Zustand einen Durchmesser von circa 15 cm. Der aus pastösem Schmiermittel 3 bestehende Schmiermittelformling 3.2 wird - wie in Fig. 5 dargestellt - zur besseren Handhabung im Transportbeutel 6 bereitgestellt.

Gemäß der in Fig. 6 gezeigten Anwendung der zweiten Ausführung des Schmiermittelapplikators 1 wird zunächst der Schmiermittelträger 2 in die Betonförderleitung 5 eingeschoben und anschließend - vorzugsweise direkt aus dem einseitig geöffneten Transportbeutel 6 heraus - der Schmiermittelformling 3.2 in die Betonförderleitung 5 eingeführt, wobei der Schmiermittelformling 3.2 an den Schmiermittelträger 2 auf dessen der Front des Frischbetons 4 zugewandten Oberfläche angedrückt ist. Aufgrund der pastösen Konsistenz des Schmiermittelformlings 3.2 passt sich dieser an den Schmiermittelträger 2 an. Diese aneinandergedrückte Einheit aus dem Schmiermittelträger 2 und dem Schmiermittelformling 3.2 bildet den Schmiermittelapplikator 1.

Bei Einleitung des Frischbetons 4 in Förderrichtung 8 in die Betonförderleitung 5 drückt die Front des Frischbetons 4 gegen den Schmiermittelformling 3.2 und dieser wiederum gegen den auf etwa 80 % seines Ausgangsdurchmessers komprimierten Schmiermittelträger 2. Die Bewegung des Schmiermittelträgers 2 durch die Betonförderleitung 5 wird durch Reibungskräfte gebremst. Der zwischen der Front des Frischbetons 4 und dem gebremsten Schmiermittelträger 2 befindliche Schmiermittelformling 3.2 wird durch die entgegengesetzt wirkenden Kräfte axial zusammengedrückt. Da das Schmiermittel 3 im Regelfall inkompressibel, aber fließfähig bzw. plastisch verformbar ist, wird durch den Axialdruck ein gleichmäßiger radialer Druck nach außen erzeugt, wobei sich das Schmiermittel 3 in dieser Quetschzone zwischen dem Schmiermittelträger 2 und der Front des Frischbetons 4 allumfänglich an die Innenwandung der Betonförderleitung 5 anlegt. Hierdurch bildet sich vor der Front des Frischbetons 4 der umfänglich gleichmäßige Schmierfilm 3.1 aus.

Der Schmiermittelapplikator 1 gemäß der zweiten Ausführung kann - siehe hierzu Fig. 12 und Fig. 13 - zur Vorratslagerung in einem Transportbeutel 6 und einer aus einem Kunststoffrohr gebildeten Transportkartusche 7 verpackt bereitgestellt werden.

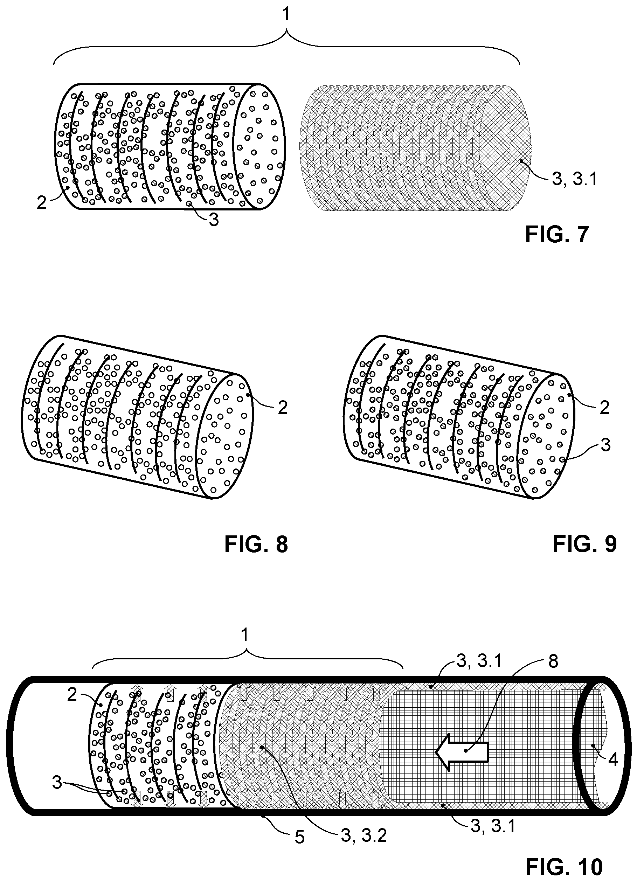

Die dritte Ausführung des Schmiermittelapplikators 1 gemäß Fig. 7 umfasst den in Form eines monolithischen Vollzylinders ausgebildeten Schmiermittelträger 2 aus einem offenporigen Schaumstoff. Im Ausführungsbeispiel besitzt der Schmiermittelträger 2 - im unkomprimierten Zustand - eine Länge von circa 20 cm und einen Außendurchmesser von circa 14 cm. Durch Kompression des weichelastischen Schaumstoffs kann der Schmiermittelträger 2 manuell auf eine Länge von circa 6,5 cm und einen Außendurchmesser von circa 5 cm zusammengedrückt werden.

Der Schmiermittelapplikator 1 umfasst zudem die vorgegebene Mengeneinheit des Schmiermittels 3, die sich auf zwei Teile aufteilt: Mit einem Teil der vorgegebenen Mengeneinheit des Schmiermittels 3 ist der Schmiermittelträger 2 getränkt; den anderen Teil der vorgegebenen Mengeneinheit des Schmiermittels 3 bildet der Schmiermittelformling 3.2, der in dieser Ausbildung auch als Extender bezeichnet wird.

Der Schmiermittelträger 2 kann im Ausgangszustand sowohl ungetränkt - siehe Fig. 8 - als auch vorgetränkt - siehe Fig. 9 - vorliegen.

Gemäß der in Fig. 10 veranschaulichten Anwendung der dritten Ausführung des Schmiermittelapplikators 1 wird der Schmiermittelträger 2 im bereits vorgetränkten Zustand in die Betonförderleitung 5 eingesetzt. Die in den Schmiermittelträger 2 eingebrachte Menge an Schmiermittel 3 umfasst hierbei etwa 2,5 kg bis 3 kg Schmiermittel 3. Hinter dem mit Schmiermittel 3 getränkten Schmiermittelträger 2 wird der Schmiermittelformling 3.2 in die Betonförderleitung 5 eingeführt. Der Schmierfilm 3.1 bildet sich beim Fördern des Frischbetons 4 aus dem aus dem Schmiermittelträger 2 austretenden Schmiermittel 3 und außerdem aus dem in der Quetschzone an der Innenwandung anliegenden Schmiermittel 3 des Schmiermittelformlings 3.2. Ein Teil des Schmiermittels 3 des Schmiermittelformlings 3.2 wird ferner in das offenporige Schaummaterial des Schmiermittelträgers 2 gedrückt, aus dem das Schmiermittel 3 dann wieder im Bereich der Innenwandung austritt. Der mit dem Schmiermittel 3 getränkte Schmiermittelträger 2 wäre grundsätzlich bereits eigenständig als Schmiermittelapplikator 1 verwendbar. Über den Schmiermittelformling 3.2 wird in der dritten Ausführung des Schmiermittelapplikators 1 also zusätzliches Schmiermittel 3 bereitgestellt. Der Schmiermittelformling 3.2 verlängert die Länge der mit dem Schmiermittelapplikator 1 schmierbaren Betonförderleitung 5 und wird in dieser Ausführung daher auch als Extender bezeichnet.

Der Schmiermittelapplikator 1 gemäß der dritten Ausführung kann - siehe hierzu Fig. 14 - zur Vorratslagerung in Transportbeuteln 6 und einer aus einem Kunststoffrohr gebildeten Transportkartusche 7 verpackt bereitgestellt werden. Der mit Schmiermittel 3 getränkte Schmiermittelträger 2 und der Schmiermittelformling 3.2 sind jeweils separat in einem Transportbeutel 6 verpackt.

### Bezugszeichenliste

- 1: Schmiermittelapplikator
- 2: Schmiermittelträger
- 3: Schmiermittel
- 3.1: Schmierfilm
- 3.2: Schmiermittelformling
- 4: Frischbeton
- 5: Betonförderleitung
- 6: Transportbeutel
- 7: Transportkartusche
- 8: Förderrichtung

## Patentansprüche

1. Schmiermittelapplikator (1) zum Schmieren einer Betonförderleitung (5) durch Erzeugen eines aus einem Schmiermittel (3) bestehenden Schmierfilms (3.1) auf der Innenwandung der Betonförderleitung (5), **dadurch gekennzeichnet, dass** der Schmiermittelapplikator (1) eine vorgegebene Mengeneinheit des Schmiermittels (3) zur Bildung des Schmierfilms (3.1) sowie einen Schmiermittelträger (2) aus einem weichelastischen Material umfasst, wobei der Schmiermittelapplikator (1) ausgebildet ist, bei Förderung von Frischbeton (4) durch die Betonförderleitung (5) in Förderrichtung (8) vor der Front des Frischbetons (4) durch die Betonförderleitung (5) zu gleiten, wobei der Schmiermittelträger (2) in Form eines allumfänglich an der Innenwandung der Betonförderleitung (5) unter geringem Radialdruck anliegenden Pfropfens ausgebildet ist, und wobei die vorgegebene Mengeneinheit des Schmiermittels (3) bei in die Betonförderleitung (5) eingebrachtem Schmiermittelträger (2) vom Schmiermittelträger (2) aufgenommen und/oder an den Schmiermittelträger (2) auf dessen der Front des Frischbetons (4) zugewandten Oberfläche angedrückt ist.

2. Schmiermittelapplikator (1) nach Anspruch 1, **dadurch gekennzeichnet, dass** das weichelastische Material des Schmiermittelträgers (2) ein Schaumstoff oder ein textiler Werkstoff ist.

3. Schmiermittelapplikator (1) nach Anspruch 2, **dadurch gekennzeichnet, dass** das weichelastische Material des Schmiermittelträgers (2) ein offenporiger Schaumstoff oder ein Kurzfasertextil ist, wobei das weichelastische Material zumindest mit einem Teil der vorgegebenen Mengeneinheit des Schmiermittels (3) getränkt ist.

4. Schmiermittelapplikator (1) nach einem der Ansprüche 1 bis 3, **dadurch gekennzeichnet, dass** der Schmiermittelträger (2) in der Form eines Zylinders ausgebildet ist.

5. Schmiermittelapplikator (1) nach einem der Ansprüche 1 bis 3, **dadurch gekennzeichnet, dass** der Schmiermittelträger (2) in der Form eines Projektils ausgebildet ist.

6. Schmiermittelapplikator (1) nach Anspruch 4 oder 5, **dadurch gekennzeichnet, dass** der Schmiermittelträger (2) an der äußeren Mantelfläche eine Gewinderille aufweist.

7. Schmiermittelapplikator (1) nach einem der Ansprüche 1 bis 3, **dadurch gekennzeichnet, dass** der Schmiermittelträger (2) in Form eines aus einer flexiblen Matte oder Bahn gewickelten Zylinders ausgebildet ist.

8. Schmiermittelapplikator (1) nach einem der Ansprüche 1 bis 3, **dadurch gekennzeichnet, dass** der Schmiermittelträger (2) in Form einer Kugel oder eines Balls ausgebildet ist.

9. Schmiermittelapplikator (1) nach einem der Ansprüche 1 bis 8, **dadurch gekennzeichnet, dass** die vorgegebene Mengeneinheit des Schmiermittels (3) oder ein Teil derselben in Form eines aus dem Schmiermittel (3) bestehenden, pastösen Schmiermittelformlings (3.2) ausgebildet ist, wobei bei in die Betonförderleitung (5) eingebrachtem Schmiermittelapplikator (1) der Schmiermittelformling (3.2) an den Schmiermittelträger (2) an dessen der Front des Frischbetons (4) zugewandten Seite angedrückt ist.

10. Verfahren zum Schmieren einer Betonförderleitung (5) durch Erzeugen eines aus einem Schmiermittel (3) bestehenden Schmierfilms (3.1) auf der Innenwandung der Betonförderleitung (5), **dadurch gekennzeichnet, dass** das Verfahren mittels eines Schmiermittelapplikators (1) nach einem der Ansprüche 1 bis 9 durchgeführt wird, wobei
- der aus dem Schmiermittelträger (2) und der vorgegebenen Mengeneinheit des Schmiermittels (3) gebildete Schmiermittelapplikator (1) in die Betonförderleitung (5) eingesetzt wird, und
- der Frischbeton (4) in die mit dem Schmiermittelapplikator (1) bestückte Betonförderleitung (5) gepumpt wird, wobei der Frischbeton (4) den Schmiermittelapplikator (1) vor seiner Front hertreibt, und wobei sich das vom Schmiermittelträger (2) geführte Schmiermittel (3) während des Gleitens durch die Betonförderleitung (5) in Förderrichtung (8) kometenschweifartig hinter dem Schmiermittelträger (2) an die Innenwandung der Betonförderleitung (5) unter Ausbildung des Schmierfilms (3.1) anlagert.
